# EUROPÄISCHE PATENTSCHRIFT

(11) **EP 3 494 775 B1**
(45) Veröffentlichungstag und Bekanntmachung des Hinweises auf die Patenterteilung: **09.12.2020**
(21) Anmeldenummer: 18200016.6
(22) Anmeldetag: 12.10.2018
(51) Int. Cl.: A01F 12/44

(54) **MÄHDRESCHER UND GEBLÄSE DAFÜR**
COMBINE HARVESTER AND FAN FOR SAME
MOISSONNEUSE-BATTEUSE ET SOUFFLANTE CORRESPONDANTE

(30) Priorität: 06.12.2017 DE 102017011233
(43) Veröffentlichungstag der Anmeldung: 12.06.2019
(73) Patentinhaber: CLAAS Selbstfahrende Erntemaschinen GmbH, 33428 Harsewinkel (DE)
(72) Erfinder: Baumgarten, Joachim, 48361 Beelen (DE); Schürmann, Ludger, 48488 Emsbüren (DE); Lehmberg, Andreas, 33428 Harsewinkel (DE)
(74) Vertreter: CLAAS Gruppe

(56) Entgegenhaltungen:
- DE-A1-102011 000 130
- DE-C- 924 595
- FR-A- 1 441 981
- GB-A- 918 838
- US-A- 4 906 219
- US-A- 5 376 046

## Beschreibung

Die vorliegende Erfindung betrifft einen Mähdrescher und insbesondere ein Gebläse, das in einem Mähdrescher zur Luftversorgung einer Siebanordnung eingesetzt werden kann, in der kleine Nichtkornbestandteile wie etwa Spelzen und Ährenbruchstücke vom ausgedroschenen Korn abgetrennt werden.

Ein solches Gebläse und ein Mähdrescher, in dem es verwendet wird, sind aus DE 10 2011 000 130 A1 bekannt. Dieses bekannte Gebläse umfasst einen um eine Achse drehbaren Rotor, dessen Nabe gleichzeitig Läufer eines elektrischen Außenläufermotors ist, mit einer Vielzahl von von der Nabe radial abstehenden Luftschaufeln, und ein Gehäuse, das wenigstens eine Ansaugöffnung und zwei Ausströmöffnungen aufweist und einen sich um den Rotor herum erstreckenden Gebläsekanal begrenzt. Der Gebläsekanal umfasst zwei Abschnitte, die den Rotor jeweils auf einem Teil seines Umfangs umgeben und deren radiale Abmessung jeweils von einem Minimum, angrenzend an eine der Ausströmöffnungen, in Drehrichtung des Rotors bis zur nächsten Ausströmöffnung kontinuierlich zunimmt, um von dem Rotor radial nach außen fortgetriebene Luft zu sammeln und in Bewegungsrichtung des Rotors bis zur nächsten Ausströmöffnung zu führen.

Indem das Gehäuse die freie Bewegung der vom Rotor angetriebenen Luft in radialer Richtung behindert, beeinträchtigt sie die Energieeffizienz des Gebläses. Um den auf das Gehäuse zurückgehenden Strömungswiderstand zu minimieren, wäre es an sich wünschenswert, die radialen Abmessungen des Gebläsekanals zu vergrößern, doch scheitert dies an dem begrenzten Einbauraum, der für das Gebläse in einem Mähdrescher zur Verfügung steht.

Aufgabe der Erfindung ist, ein Gebläse zur Verwendung in einem Mähdrescher zu schaffen, dass trotz kompakter Abmessungen einen hohen Wirkungsgrad erreicht.

Die Aufgabe wird gelöst, indem bei einem Gebläse für einen Mähdrescher mit wenigstens einem um eine Achse drehbaren Rotor und einem Gehäuse, das wenigstens eine Ansaugöffnung und eine erste Ausströmöffnung aufweist und einen sich um den Rotor herum erstreckenden Gebläsekanal begrenzt, die axiale Ausdehnung des Gebläsekanals entlang des Umfangs in Drehrichtung des Rotors zur ersten Ausströmöffnung hin zunimmt.

Da die axiale Ausdehnung des Gebläsekanals nicht auf dem gesamten Umfang des Gehäuses vergrößert ist, ist der Zufluss von Luft zu einer an wenigstens einer Stirnseite des Gehäuses um die Achse herum vorgesehenen Ansaugöffnung nicht merklich eingeschränkt.

Ein Rand der Ansaugöffnung kann eine zur Achse senkrechte Ebene definieren. Dieselbe Ebene kann den Gebläsekanal in einen Kernbereich und einen Erweiterungsbereich unterteilen, wobei der Kernbereich nach innen vom Rotor begrenzt ist und der entlang des Umfangs in Drehrichtung des Rotors zur Ausströmöffnung hin zunehmende Querschnitt des Erweiterungsbereichs zu der zur ersten Ausströmöffnung hin zunehmenden axialen Ausdehnung des Gebläsekanals beiträgt.

Der Kernbereich kann in aus DE 10 2011 000 130 A1 bekannter Weise eine entlang des Umfangs in Drehrichtung des Rotors zur ersten Ausströmöffnung hin zunehmende axiale Ausdehnung aufweisen.

Um zu verhindern, dass Luft aus dem in axialer Richtung verbreiterten Gebläsekanal unmittelbar zur Saugöffnung zurückströmt, kann der Erweiterungsbereich zur Achse hin durch eine Wand des Gehäuses begrenzt sein, deren axiale Abmessung entlang des Umfangs in Drehrichtung des Rotors zur Ausströmöffnung hin zunimmt.

Zu demselben Zweck sollte der Durchmesser des Rotors größer sein als der Durchmesser der Ansaugöffnung.

Um den Querschnitt des Erweiterungsbereichs bei gegebenen Außenmaßen des Gebläses groß machen zu können, sollte für den Erweiterungsbereich insbesondere achsnaher Raum genutzt werden, d.h. der Erweiterungsbereich sollte radial mit dem Rotor überlappen.

An der ersten Ausströmöffnung kann eine Umlenkfläche zum Umlenken des aus der Ausströmöffnung austretenden Luftstroms entgegen der Drehrichtung des Rotors angeordnet sein. Dies ist insbesondere dann nützlich, wenn über die erste und eine zweite Ausströmöffnung ein Verbraucher mit Blasluft versorgt werden soll, der an das Gehäuse nur auf einem Teil von dessen Umfang angrenzt.

Um einen senkrecht zur Achse orientierten Blasluftstrom zu erzeugen, sollten die Gehäuse zueinander spiegelbildliche Stirnseiten aufweisen.

Bei einem Gebläse zur Verwendung in einem Mähdrescher sind typischerweise mehrere Rotoren und Gehäuse entlang der Achse angeordnet, um einen sich über einen breiten Querschnitt, idealerweise nahezu die gesamte Breite des Karosserieaufbaus des Mähdreschers, verteilten Blasluftstrom zu erzeugen. Zwischen einander gegenüberliegenden Stirnseiten der Gehäuse sollte jeweils ein Zwischenraum vorhanden sein, über den eine in einer solchen Stirnseite angeordnete Saugöffnung mit Frischluft versorgt werden kann.

Die Umlenkfläche kann bei einer solchen Anordnung von mehreren Rotoren und Gehäusen eine Rinne sein, die sich in axialer Richtung durchgehend über die mehreren Gehäuse hinweg erstreckt.

Wenn das Gehäuse eine zweite Ausströmöffnung aufweist, kann die axiale Ausdehnung des Gebläsekanals in einem sich in Drehrichtung des Rotors von der ersten zur zweiten Ausströmöffnung erstreckenden Umfangsabschnitt ebenfalls zur zweiten Ausströmöffnung hin zunehmen, oder sie kann konstant sein, um den Aufbau des Gehäuses einfach zu halten. Indem vorzugsweise derjenige Umfangsabschnitt des Gebläsekanals in axialer Richtung verbreitert wird, der auf eine Umlenkfläche an der ersten Ausströmöffnung zuläuft, kann der Nachteil eines durch die Umlenkfläche erhöhten Strömungswiderstandes ausgeglichen werden.

Gegenstand der Erfindung ist ferner ein Mähdrescher mit einer Schneid- und Zuführeinrichtung für Erntegut, einer Drescheinrichtung zum Abscheiden von Korn aus dem Erntegut, einer Siebanordnung und einem Gebläse wie oben beschrieben, das die Siebanordnung mit Blasluft versorgt.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: einen schematischen Schnitt durch einen Mähdrescher gemäß der vorliegenden Erfindung;
- Fig. 2: eine perspektivische Ansicht eines Moduls eines Gebläses gemäß der vorliegenden Erfindung;
- Fig. 3: einen axialen Schnitt durch ein Gebläsemodul; und
- Fig. 4: eine perspektivische Ansicht der Gehäuse mehrerer untereinander verbundener Module.

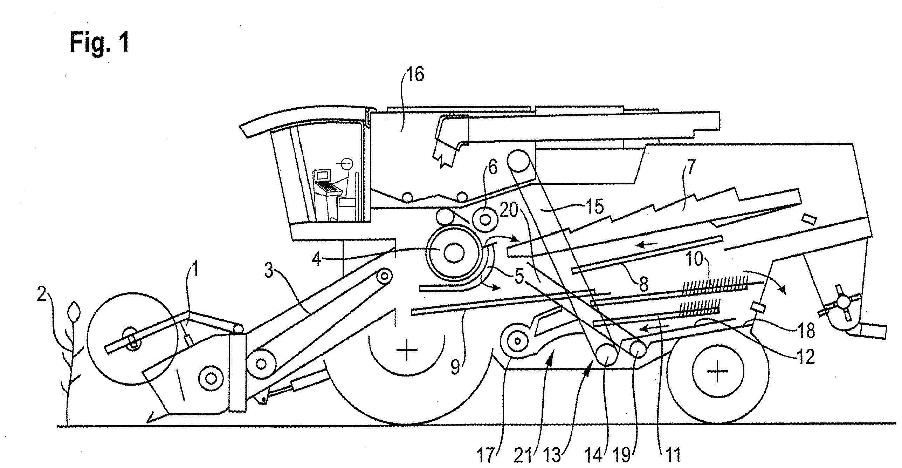

Der in Fig. 1 schematisch gezeigte Mähdrescher trägt an seiner Vorderseite ein austauschbares Schneidwerk wie etwa ein Getreideschneidwerk 1 zum Schneiden und Sammeln von Erntegut 2. Ein Schrägförderer 3 befördert das geschnittene Erntegut zu einer mit quer zur Fahrtrichtung des Mähdreschers ausgerichteter Achse angeordneten Dreschtrommel 4 und einem Dreschkorb 5. Aus dem Erntegut ausgedroschenes Korn passiert den Dreschkorb 5. Eine Wendetrommel 6 dient zur Weiterbeförderung des gedroschenen Ernteguts zu einer Abscheidereinrichtung 7, hier dargestellt als ein Strohschüttler, die restliches Korn sowie kleinteiliges Nichtkornmaterial aus dem Strom des gedroschenen Ernteguts isoliert. Anstelle des Strohschüttlers kann als Abscheidereinrichtung 7 auch ein Axialabscheider, z.B. mit einer oder zwei sich in Längsrichtung des Mähdreschers erstreckenden Trommeln, umgeben von Abscheidekörben, vorgesehen sein.

Erntegut, welches durch Körbe der Abscheidereinrichtung 7 hindurch gefallen ist, gelangt auf einen sich unter der Abscheidereinrichtung 7 erstreckenden, nach vorn abschüssigen Rücklaufboden 8 und über diesen zu einem Vorbereitungsboden 9, auf dem es mit unmittelbar an der Dreschtrommel 4 abgeschiedenem und durch den Dreschkorb 5 hindurch getretenen Korn zusammengeführt wird. Der dadurch erhaltene Gutstrom, der reich an Korn ist, aber auch fein zerkleinerte Nichtkornbestandteile enthält, wird weiterbefördert auf ein Obersieb 10 einer Siebanordnung 21.

Das Obersieb 10 und ein darunter liegendes, zu dem Obersieb 10 in etwa paralleles Untersieb 11 sind unten und seitlich von einem Siebgehäuse umschlossen. Das Untersieb 11 ist ebenfalls Teil der Siebanordnung 21 Der in Fig. 1 gezeigte Boden 12 des Siebgehäuses ist von einem an einen hinteren Rand des Untersiebs 11 angrenzenden Rand aus nach vorn zu einer Schneckenmulde 13 hin abschüssig, in welcher eine Förderschnecke 14 rotiert. Die Förderschnecke 14 und ein daran angeschlossener Kornelevator 15 befördern von Nichtkornbestandteilen gereinigtes Korn, das sich auf dem Boden 12 sammelt, in einen Korntank 16 hinter der Führerkanzel des Mähdreschers.

Die Siebanordnung 21 und ein Gebläse 17 bilden eine Reinigungseinrichtung zum Entfernen der Nichtkornbestandteile aus dem Erntegutstrom. Das Gebläse 17 ist vor der Siebanordnung 21 platziert, um einen entgegen der Fahrtrichtung gerichteten Luftstrom zu liefern, der teils durch die Siebe 10, 11 hindurch, teils über sie hinweg streicht, um leichte Bestandteile des auf den Sieben 10, 11 befindlichen Ernteguts anzuheben und fort zu tragen. Bestandteile, die von dem Luftstrom über eine hintere Kante des Obersiebs 10 hinweg getragen werden, werden direkt aus dem Mähdrescher ausgeworfen, wie durch einen Pfeil in Fig. 1 angedeutet. Bei Bestandteilen, die durch das Obersieb 10 hindurch auf das Untersieb 11 gelangt sind und dort vom Luftstrom fort getragen werden, handelt es sich häufig um unvollständig ausgedroschene Ährenbruchstücke. Diese fallen über die hintere Kante des Untersiebs 11 hinweg auf einen Überkehrboden 18, sammeln sich an dessen unterem Rand an einer zweiten Schnecke 19, und gelangen über diese und einen Elevator 20 zurück zur Dreschtrommel 4.

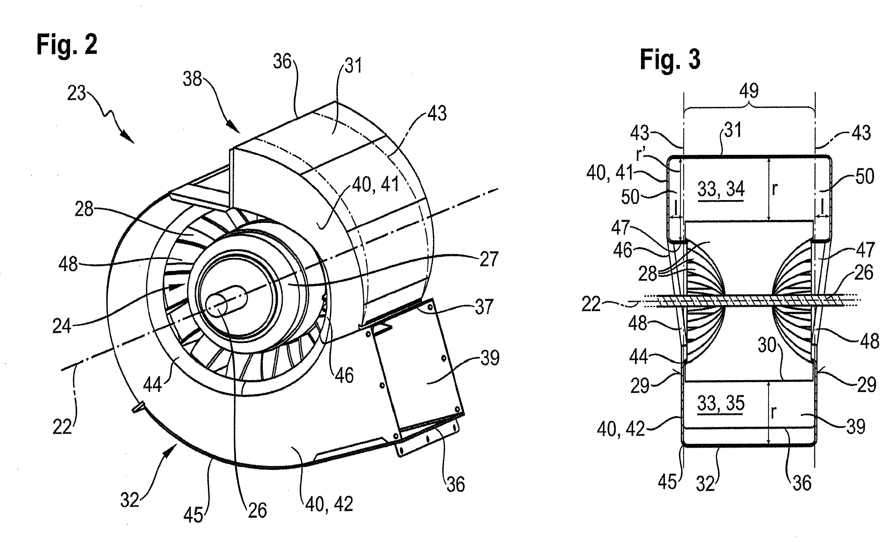

Das Gebläse 17 umfasst mehrere entlang einer sich senkrecht zur Schnittebene der Fig. 1 erstreckenden Achse 22 aufgereihte Gebläsemodule 23. Fig. 2 und 3 zeigen ein solches Gebläsemodul 23 in einer perspektivischen Ansicht bzw. in einem Schnitt entlang einer von der Achse 22 und einem Radius aufgespannten Ebene. Die Gebläsemodule 23 umfassen jeweils einen Rotor 24 und ein den Rotor 24 umgebendes Gehäuse 25. Der Rotor 24 kann wie in der perspektivischen Ansicht der Fig. 2 gezeigt und in DE 10 2011 000 130 A1 im Detail beschrieben an einer drehfesten Welle 26 montiert sein und eine Nabe 27 in Form eines Außenläufermotors mit einer Vielzahl von vom Außenläufer des Motors radial abstehenden Luftschaufeln 28 haben; es können die Luftschaufeln 28 aber auch, wie in Fig. 3 gezeigt, starr an einer drehbaren, allen Modulen gemeinsamen Welle 26 angebracht sein. Die Luftschaufeln 28 definieren durch Drehung um die Achse 22 einen zylindrischen Rotationskörper mit zwei zur Achse 22 senkrechten Stirnflächen 29 und einer Umfangsfläche 30 (s. Fig. 3).

Das Gehäuse 25 umfasst zwei Umfangswandsektoren 31, 32, die sich in einem Schnitt quer zur Achse 22 jeweils entlang einer Spirale, vorzugsweise einer archimedischen Spirale, erstrecken. Die Umfangswandsektoren 31, 32 erstrecken sich über in etwa gleich große Teile des Umfangs des Gehäuses 25. Der Radius der Spiralen nimmt jeweils in Drehrichtung des Rotors 24, in Fig. 2 im Gegenuhrzeigersinn, zu, so dass ein sich zwischen der Umfangsfläche 30 und den Umfangswandsektoren 31, 32 um den Rotor 24 herum erstreckender Gebläsekanal 33 in zwei Umfangsabschnitte 34, 35 gegliedert ist, deren radiale Abmessung r jeweils in Drehrichtung des Rotors 24, linear mit dem Drehwinkel zunimmt, bis eine jeweils von einem achsfernen Rand 36 des einen Umfangswandsektors 31, 32 und einen achsnahen Rand 37 des anderen Umfangswandsektors 32, 31 begrenzte Ausströmöffnung 38 bzw. 39 erreicht ist.

Der Umfangswandsektor 31 hat die Form eines symmetrischen Trapezes, wobei sein achsnaher Rand 37 eine kurze Grundseite und der achsferne Rand 36 eine lange Grundseite des Trapezes bildet. Der Umfangswandsektor 32 ist in den Ausgestaltungen der Fig. 2 und 3 rechteckig, könnte aber ebenfalls trapezförmig und mit zunehmender Entfernung von der Achse 22 verbreitert sein.

Zwei Stirnseiten 40 des Gehäuses 25 sind jeweils aus zwei Flachmaterialzuschnitten 41, 42 zusammengefügt. Der Zuschnitt 42 erstreckt sich in einer zur Achse 22 senkrechten Ebene 43, wobei ein innerer oder achsnaher Rand 44 und ein äußerer Rand 45 des Zuschnitts 42 einen Kreisbogen bzw. eine Spirale um die Achse 22 beschreiben; der äußere Rand 45 ist mit einem Längsrand des Umfangswandsektors 32 verbunden.

Ein innerer Rand 46 des Zuschnitts 41 verläuft auf einer Schraubenlinie um die Achse 22. Von dem inneren Rand 46 aus erstreckt sich eine innere Wand 47 bis zur Ebene 43, so dass der dem Rotor 24 zugewandte Rand dieser Wand 47 und der innere Rand 44 des Zuschnitts 42 eine Ansaugöffnung 48 des Gehäuses 25 in der Ebene 43 begrenzen.

Die Stirnflächen 29 an beiden Seiten des Rotors 24 liegen den Zuschnitten 42 eng benachbart gegenüber, um einen Rückfluss von im Gebläsekanal unter erhöhtem Druck stehender Luft aus dem Umfangsabschnitt 35 zur Ansaugöffnung 48 zu verhindern.

Der Umfangsabschnitt 34 des Gebläsekanals hat einen Kernbereich 49, der wie der gesamte Umfangsabschnitt 35 zwischen den Ebenen 43 liegt, und Erweiterungsbereiche 50 jenseits der Ebenen 43. Sowohl die radiale Abmessung r' als auch die axiale Abmessung 1 der Erweiterungsbereiche 50 ist minimal in unmittelbarer Nähe zur Ausströmöffnung 39 des Umfangsabschnitt 35 und nimmt von dort aus bis zur Ausströmöffnung 38 in Umfangsrichtung stetig zu. Die axiale Abmessung r' der Erweiterungsbereiche 50 ist größer als die Abmessung r des Kernbereichs 49, da sich die Erweiterungsbereiche 50 über die Umfangsfläche 30 hinaus in Richtung der Achse 22 ausdehnen.

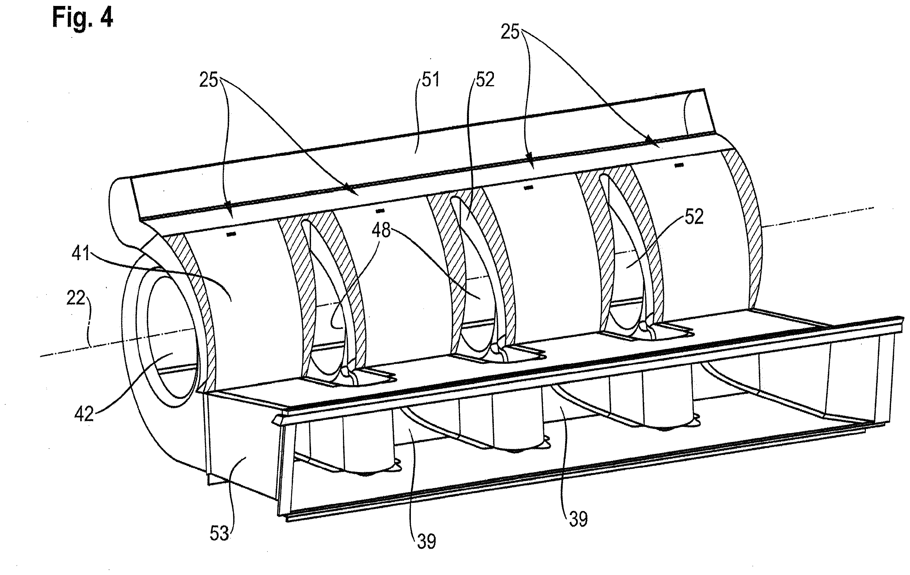

Fig. 4 zeigt untereinander verbundene Gehäuse 25 mehrerer Module 23. Die Form der Gehäuse 25 ist dieselbe wie in Fig. 2 und 3 gezeigt und oben beschrieben. Die Gehäuse 25 sind entlang der Achse 22 so dicht angeordnet, dass die Ränder ihrer (vom Betrachter abgewandten) Ausströmöffnungen 38 einander berühren. Diesen Ausströmöffnungen 38 liegt eine sich in Richtung der Achse 22 langgestreckte Rinne 51 gegenüber, die die an den Ausströmöffnungen 38 austretende Luft umlenkt, so dass sie, wenn das Gebläse 17 im Mähdrescher eingebaut ist, entgegen der Fahrtrichtung umgelenkt wird, um das Obersieb 10 der hinter dem Gebläse 17 montierten Siebanordnung 21 zu erreichen. Der Siebanordnung 21 zugewandte Lücken 52 zwischen den trapezförmigen Zuschnitten 41 der Gehäuse 25 sind zu der Rinne 51 hin verengt. Die Zufuhr von Frischluft zu den sich an den Stirnseiten der Gehäuse 25 gegenüberliegenden Ansaugöffnungen 48 ist dadurch nicht merklich eingeschränkt, da der Abstand zwischen den Zuschnitten 42 der Gehäuse 25 groß bleibt und einen ungehinderten Frischluftzustrom insbesondere von unten und von vorn ermöglicht.

Die Ausströmöffnungen 39 der Gehäuse 25 sind voneinander in Richtung der Achse 22 beabstandet und münden in einen von oben gesehen kammförmigen Sammler 53. Indem die Gehäuse 25 an der Rinne 51 und am Sammler 53 befestigt werden, kann das Gebläse 17 komplett außerhalb der Mähdrescherkarosserie vormontiert und als Baueinheit in diese eingefügt werden.

### Bezugszeichenliste

- 1: Getreideschneidwerk
- 2: Erntegut
- 3: Schrägförderer
- 4: Dreschtrommel
- 5: Dreschkorb
- 6: Wendetrommel
- 7: Abscheidereinrichtung
- 8: Rücklaufboden
- 9: Vorbereitungsboden
- 10: Obersieb
- 11: Untersieb
- 12: Boden
- 13: Schneckenmulde
- 14: Förderschnecke
- 15: Kornelevator
- 16: Korntank
- 17: Gebläse
- 18: Überkehrboden
- 19: Schnecke
- 20: Elevator
- 21: Siebanordnung
- 22: Achse
- 23: Gebläsemodul
- 24: Rotor
- 25: Gehäuse
- 26: Welle
- 27: Nabe
- 28: Luftschaufel
- 29: Stirnfläche
- 30: Umfangsfläche
- 31: Umfangswandsektor
- 32: Umfangswandsektor
- 33: Gebläsekanal
- 34: Umfangsabschnitt
- 35: Umfangsabschnitt
- 36: achsferner Rand
- 37: achsnaher Rand
- 38: Ausströmöffnung
- 39: Ausströmöffnung
- 40: Stirnseite
- 41: Zuschnitt
- 42: Zuschnitt
- 43: Ebene
- 44: innerer Rand
- 45: äußerer Rand
- 46: innerer Rand
- 47: innere Wand
- 48: Ansaugöffnung
- 49: Kernbereich
- 50: Erweiterungsbereich
- 51: Rinne
- 52: Lücke

## Patentansprüche

1. Gebläse für einen Mähdrescher mit wenigstens einem um eine Achse (22) drehbaren Rotor (24) und einem Gehäuse (25), das wenigstens eine Ansaugöffnung (48) und eine erste Ausströmöffnung (38) aufweist und einen sich um den Rotor (24) herum erstreckenden Gebläsekanal (33) begrenzt, **dadurch gekennzeichnet, dass** die axiale Ausdehnung des Gebläsekanals (33) entlang des Umfangs in Drehrichtung des Rotors (24) zur ersten Ausströmöffnung (38) hin zunimmt.

2. Gebläse nach Anspruch 1, **dadurch gekennzeichnet, dass** die Ansaugöffnung (48) an wenigstens einer Stirnseite (40) des Gehäuses (25) vorgesehen ist und die Achse (22) durch die Ansaugöffnung (48) verläuft.

3. Gebläse nach Anspruch 1 oder 2, **dadurch gekennzeichnet, dass** ein Rand (44) der Ansaugöffnung (48) eine zur Achse (22) senkrechte Ebene (43) definiert und den Gebläsekanal (33) in einen radial nach innen vom Rotor (24) begrenzten Kernbereich (49) und einen Erweiterungsbereich (50) unterteilt, dessen Querschnitt entlang des Umfangs in Drehrichtung des Rotors (24) zur ersten Ausströmöffnung (38) hin zunimmt.

4. Gebläse nach Anspruch 3, **dadurch gekennzeichnet, dass** der Erweiterungsbereich (50) zur Achse (22) hin durch eine Wand (47) des Gehäuses (25) begrenzt ist, deren axiale Abmessung entlang des Umfangs in Drehrichtung des Rotors (24) zur ersten Ausströmöffnung (38) hin zunimmt.

5. Gebläse nach einem der Ansprüche 2 bis 4, **dadurch gekennzeichnet, dass** der Durchmesser des Rotors (24) größer ist als der Durchmesser der Ansaugöffnung (48).

6. Gebläse nach Anspruch 3 oder 4, **dadurch gekennzeichnet, dass** der Erweiterungsbereich (50) radial mit dem Rotor (24) überlappt.

7. Gebläse nach einem der vorhergehenden Ansprüche, **dadurch gekennzeichnet, dass** an der ersten Ausströmöffnung (38) eine Umlenkfläche zum Umlenken des aus der Ausströmöffnung (38) austretenden Luftstroms entgegen der Drehrichtung des Rotors (24) angeordnet ist.

8. Gebläse nach einem der vorhergehenden Ansprüche, **dadurch gekennzeichnet, dass** die Gehäuse (25) zueinander spiegelbildliche Stirnseiten (40) aufweisen.

9. Gebläse nach einem der vorhergehenden Ansprüche, **dadurch gekennzeichnet, dass** mehrere Rotoren (24) und Gehäuse (25) entlang der Achse (22) angeordnet sind.

10. Gebläse nach Anspruch 9, soweit auf Anspruch 7 rückbezogen, **dadurch gekennzeichnet, dass** die Umlenkfläche eine sich in axialer Richtung über die mehreren Gehäuse (25) erstreckende Rinne (51) ist.

11. Gebläse nach einem der vorhergehenden Ansprüche, **dadurch gekennzeichnet, dass** das Gehäuse (25) eine zweite Ausströmöffnung (39) aufweist und dass die axiale Ausdehnung des Gebläsekanals (33) in einem sich in Drehrichtung des Rotors (24) von der ersten Ausströmöffnung (38) zur zweiten Ausströmöffnung (39) erstreckenden Umfangsabschnitt (35) des Gebläsekanals (33) konstant ist.

12. Mähdrescher mit einer Schneid- und Zuführeinrichtung (1, 3) für Erntegut, einer Drescheinrichtung (4) zum Abscheiden von Korn aus dem Erntegut, einer Siebanordnung (21) und einem Gebläse (17) nach einem der vorhergehenden Ansprüche zur Luftversorgung der Siebanordnung (21) .

## Claims

1. A fan for a combine harvester, having at least one rotor (24) which is rotatable about an axis (22) and a housing (25) which comprises at least one intake opening (48) and a first outflow opening (38) and delimits a fan duct (33) which extends around the rotor (24), **characterized in that** the axial extent of the fan duct (33) along the periphery increases in the direction of rotation of the rotor (24) towards the first outflow opening (38).

2. The fan according to claim 1, **characterized in that** the intake opening (48) is provided on at least one front side (40) of the housing (25) and the axis (22) runs through the intake opening (48).

3. The fan according to claim 1 or claim 2, **characterized in that** a boundary (44) of the intake opening (48) defines a plane (43) which is perpendicular to the axis (22) and divides the fan duct (33) into a core region (49) delimited radially inwardly of the rotor (24) and a widening region (50) the cross section of which along the periphery in the direction of rotation of the rotor (24) increases towards the first outflow opening (38).

4. The fan according to claim 3, **characterized in that** the widening region (50) is delimited towards the axis (22) by a wall (47) of the housing (25) the axial dimension of which along the periphery in the direction of rotation of the rotor (24) increases towards the first outflow opening (38).

5. The fan according to one of claims 2 to 4, **characterized in that** the diameter of the rotor (24) is larger than the diameter of the intake opening (48).

6. The fan according to claim 3 or claim 4, **characterized in that** the widening region (50) overlaps radially with the rotor (24).

7. The fan according to one of the preceding claims, **characterized in that** a deflection surface is disposed at the first outflow opening (38) in order to deflect the flow of air escaping from the outflow opening (38) against the direction of rotation of the rotor (24).

8. The fan according to one of the preceding claims, **characterized in that** the housings (25) have front sides (40) which are mirror images of each other.

9. The fan according to one of the preceding claims, **characterized in that** a plurality of rotors (24) and housings (24) are disposed along the axis (22).

10. The fan according to claim 9, insofar as it is dependent on claim 7, **characterized in that** the deflection surface is a channel (51) which extends in the axial direction over the plurality of housings (25).

11. The fan according to one of the preceding claims, **characterized in that** the housing (25) has a second outflow opening (39) and **in that** the axial extent of the fan duct (33) is constant in a peripheral section (35) of the fan duct (33) extending in the direction of rotation of the rotor (24) from the first outflow opening (38) to the second outflow opening (39).

12. A combine harvester with a cutting and infeed arrangement (1, 3) for crop, a threshing arrangement (4) for separating grain from the crop, a sieve assembly (21) and a fan (17) according to one of the preceding claims, for supplying air to the sieve assembly (21).

## Revendications

1. Ventilateur pour une moissonneuse-batteuse comprenant au moins un rotor (24) rotatif autour d'un arbre (22) et un carter (25) qui comporte au moins une ouverture d'aspiration (48) et une première ouverture de sortie (38) et limite un canal de ventilateur (33) s'étendant autour du rotor (24), **caractérisé en ce que** l'extension axiale du canal de ventilateur (33) croît le long de la périphérie dans le sens de rotation du rotor (24) vers la première ouverture de sortie (38).

2. Ventilateur selon la revendication 1, **caractérisé en ce que** l'ouverture d'aspiration (48) est prévue sur au moins un côté frontal (40) du carter (25), et l'axe (22) traverse l'ouverture d'aspiration (48).

3. Ventilateur selon la revendication 1 ou 2, **caractérisé en ce qu'**un bord (44) de l'ouverture d'aspiration (48) définit un plan (43) perpendiculaire à l'axe (22) et divise le canal de ventilateur (33) en une zone centrale (49) limitée radialement vers l'intérieur par le rotor (24) et en une zone d'extension (50) dont la section transversale croît le long de la périphérie dans le sens de rotation du rotor (24) vers la première ouverture de sortie (38).

4. Ventilateur selon la revendication 3, **caractérisé en ce que** la zone d'extension (50) est limitée vers l'axe (22) par une paroi (47) du carter (25) dont la dimension axiale croît le long de la périphérie dans le sens de rotation du rotor (24) vers la première ouverture de sortie (38).

5. Ventilateur selon une des revendications 2 à 4, **caractérisé en ce que** le diamètre du rotor (24) est supérieur au diamètre de l'ouverture d'aspiration (48).

6. Ventilateur selon la revendication 3 ou 4, **caractérisé en ce que** la zone d'extension (50) recouvre radialement le rotor (24).

7. Ventilateur selon une des revendications précédentes, **caractérisé en ce que**, au niveau de la première ouverture de sortie (38), est disposée une surface déflectrice pour défléchir à l'encontre du sens de rotation du rotor (24) le courant d'air sortant par l'ouverture de sortie (38) .

8. Ventilateur selon une des revendications précédentes, **caractérisé en ce que** les carters (25) comportent des côtés frontaux (40) présentant entre eux une symétrie en miroir.

9. Ventilateur selon une des revendications précédentes, **caractérisé en ce que** plusieurs rotors (24) et carters (25) sont disposés le long de l'axe (22).

10. Ventilateur selon la revendication 9, pour autant que rattachée à la revendication 7, **caractérisé en ce que** la surface déflectrice est une rigole (51) s'étendant sur les plusieurs carters (25).

11. Ventilateur selon une des revendications précédentes, **caractérisé en ce que** le carter (25) comporte une deuxième ouverture de sortie (39), et **en ce que** l'extension axiale du canal de ventilateur (33) est constante dans une portion périphérique (35) du canal de ventilateur (33) qui s'étend, dans le sens de rotation du rotor (24), depuis la première ouverture de sortie (38) jusqu'à la deuxième ouverture de sortie (39).

12. Moissonneuse-batteuse comprenant un équipement de coupe et d'amenée (1, 3) pour du produit récolté, un équipement de battage (4) pour séparer du grain du produit récolté, un agencement de tamisage (21) et un ventilateur (17) selon une des revendications précédentes pour l'alimentation en air de l'agencement de tamisage (21).
